(19) Europäisches Patentamt
European Patent Office
Office européen des brevets

(11) EP 0 828 870 B1

(12) **EUROPÄISCHE PATENTSCHRIFT**

(45) Veröffentlichungstag und Bekanntmachung des Hinweises auf die Patenterteilung:
**14.02.2001 Patentblatt 2001/07**

(21) Anmeldenummer: **96916085.2**

(22) Anmeldetag: **15.05.1996**

(51) Int Cl.[7]: **D01F 2/16**, C08L 1/24, C08B 31/12

(86) Internationale Anmeldenummer:
**PCT/EP96/02082**

(87) Internationale Veröffentlichungsnummer:
**WO 96/37643 (28.11.1996 Gazette 1996/52)**

(54) **VERFAHREN ZUR SPINNFÄRBUNG MIT FARBSALZEN**
SPIN DYEING PROCESS WITH DYEING SALTS
PROCEDE DE COLORATION DANS LA MASSE AVEC DES SELS COLORANTS

(84) Benannte Vertragsstaaten:
**AT DE ES FI GB SE**

(30) Priorität: **24.05.1995 DE 19519024**

(43) Veröffentlichungstag der Anmeldung:
**18.03.1998 Patentblatt 1998/12**

(73) Patentinhaber: **DyStar Textilfarben GmbH & Co. Deutschland KG**
**60318 Frankfurt am Main (DE)**

(72) Erfinder:
- **VON DER ELTZ, Andreas**
**D-60431 Frankfurt am Main (DE)**
- **SCHRELL, Andreas**
**D-65929 Frankfurt am Main (DE)**

(56) Entgegenhaltungen:
**EP-A- 0 665 311**
**WO-A-96/37641**
**WO-A-96/37642**
**DE-A- 3 628 244**
**DE-B- 1 238 612**
**US-A- 3 066 032**

- **CHEMICAL ABSTRACTS, vol. 86, no. 8, 21.Februar 1977 Columbus, Ohio, US; abstract no. 44681c, HASHIMOTO T ET AL: "Regenerated cellulose fibers and films" Seite 48; Spalte 1; XP002012563 & JP,A,51 121 062**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 828 870 B1

## Beschreibung

Die Einfärbung von Regeneratcellulose geschieht üblicherweise durch Bedrucken, Ausziehfärben oder Klotzfärben mit Direkt-, Reaktiv-, Küpen- oder Schwefelfarbstoffen. Diese Prozesse werden mit dem Garn oder dem Gewebe durchgeführt. Soll bei einem Spinnprozeß bereits farbiges Garn erzeugt werden, ist man bislang auf die Verwendung von Pigmenten angewiesen, die üblicherweise der Spinnlösung zugesetzt werden (Chemiefasern-Textilindustrie, Band 34/86 (1984) Heft 6, 444). Eine Schwierigkeit hierbei ist es, die Pigmente homogen zu verteilen, um einheitlich gefärbte Garne zu erhalten und die Einschleppung von Pigmenten in das Fällbad zu verhindern. Ein weiterer Mangel der Pigment - Spinnfärbung ist die Brillanz der Färbungen, die aufgrund des Einschlusses der Teilchen im Cellulosesubstrat die Brillanz von konventionellen Färbungen mit Textilfarbstoffen nicht erreicht. Eine einfache Zugabe eines Textilfarbstoffes zur Spinnlösung bewirkt zwar, daß der Farbstoff bei der Koagulation eingeschlossen wird, allerdings kann dieser Farbstoff, je nach Größe und Substantivität, wieder ausgewaschen werden. Außerdem wird das Fällbad mit Farbstoff verschmutzt, so daß aufwendige Waschprozesse notwendig würden.

Aufgabe der vorliegenden Erfindung war es, ein Verfahren zur Herstellung farbiger Regeneratcellulosefasern unter Vermeidung der vorstehend genannten Nachteile bei den daraus hergestellten Textilien zur Verfügung zu stellen.

Überraschenderweise zeigte sich, daß eine Formulierung aus kationisierten Polysacchariden und anionischen Farbstoffen in der Spinnfärbung von Viskose eingesetzt werden kann und die daraus hergestellten gefärbten Garne und Textilien die beschriebenen Nachteile des Standes der Technik überwinden.

Gegenstand der vorliegenden Erfindung ist daher ein Verfahren zur Herstellung farbiger Regeneratcellulosefasern, dadurch gekennzeichnet, daß man einer Viskosemasse, Alkalicellulose oder einer Celluloselösung eine Formulierung aus einem kationisierten Polysaccharid und einem anionischen Farbstoff in einer Menge von 1 bis 20 Gew.-%, bevorzugt 1 bis 12 Gew.-%, bezogen auf den Cellulosegehalt der Spinnmasse vor der Fällung und Verformung, zusetzt und nach einem Viskosespinnverfahren oder aus der Celluloselösung Fasern spinnt. Das kationisierte Polysaccharid bildet mit dem anionischen Farbstoff in der Formulierung eine Mischung oder ein Salz.

Als Farbsalze oder Mischungen kommen vorzugweise solche aus kationisierter Stärke oder kationisierter Cellulose und aus einem Reaktivfarbstoff, Säure- oder Direktfarbstoff, der eine oder mehrere, vorzugsweise 1 bis 6, anionische Gruppen, wie die Carboxylatgruppe und/oder Sulfonatgruppe, im Molekül enthält, in Betracht.

Kationisierte Stärken mit einem Substitutionsgrad von etwa 0,05 sind bekannt (z.B. Houben-Weyl, 1987, Bd. E20, Teil 3, S. 2135-2151) und teilweise kommerziell erhältlich, jedoch können auch solche mit einem Substitutionsgrad von größer 0,1 bis zum Maximalwert 3 eingesetzt werden. Ein Substitutionsgrad von 3 bedeutet, daß jeder der drei freien OH-Gruppen in jeder Glucose-Einheit mit einem kationischen Rest umgesetzt ist. Ein Substitutionsgrad von beispielsweise 0,01 bedeutet, daß statistisch in jeder hundertsten Glucose-Einheit eine OH-Gruppe kationisiert ist. Als kationische Reste kommen bevorzugt $C_1$-$C_4$-Alkylammonium-Reste in Betracht, die mit einer OH-Gruppe des Polysaccharids verethert sind, insbesondere Reste der Formel $-(CHR^1)_x-N^rR^2R^3R^4$, worin $R^1$ Wasserstoff, Hydroxy, Amino, Ammonium, $C_1$-$C_4$-Alkyl oder $C_1$-$C_4$-Alkoxy ist, $R^2$, $R^3$ und $R^4$ gleich oder verschieden sind und unabhängig voneinander die Bedeutung Wasserstoff, Phenyl oder $C_1$-$C_4$-Alkyl haben, wobei der Alkylrest durch ein oder mehrere OH-Gruppen oder $OCH_3$-Gruppen substituiert oder durch O-Atome oder NH-Gruppen unterbrochen sein kann, oder die Reste $R^2$, $R^3$ und $R^4$ zusammen mit dem N-Atom einen 5- bis 7-gliedrigen heterocyclischen Ring bilden, der gegebenenfalls weitere der Heteroatome N, S und O im Ring enthält, beispielsweise Pyridinium, und x eine Zahl von 1 bis 4, vorzugsweise 2 bis 3, ist.

Besonders bevorzugt sind kationische Reste der Formel

$$-CH_2CH_2NH_3^+,\ -CH_2CH_2CH_2NH_3^+,\ -CH_2CH_2N(CH_3)_3^+$$

und

$$-CH_2CHOHCH_2N(CH_3)_3^+.$$

Der Polymerisationsgrad der eingesetzten kationisierten Polysaccharide liegt zweckmäßigerweise zwischen 100 und 1000, vorzugsweise 100 und 600, Anhydroglucoseeinheiten.

Die Herstellung der niedrig substituierten kationischen Polysaccharide (Substitutionsgrad kleiner als 0,1) erfolgt nach oder analog bekannten Methoden, beispielsweise wie in Houben-Weyl, 1987, Bd. E 20, Teil 3, S. 2135-2151 beschrieben. Die Herstellung der höher substituierten kationisierten Polysaccharide (Substitutionsgrad 0,1 und größer) erfolgt, indem man das Polysaccharid, beispielsweise eine beliebige Stärke, wie Kartoffelstärke, Maisstärke oder Weizenstärke, oder eine Cellulose wie Baumwolle, Pflanzenfasern, beispielsweise Leinen, Hanf, Jute und Ramiefasern oder Zellwolle mit einer $C_1$-$C_4$-Alkylammonium-Verbindung, die einen gegenüber OH-Gruppen reaktiven Substituenten, beispielsweise eine α-Chlor-β-Hydroxy-, eine 1,2-Epoxy-, eine Sulfatoethyl- oder eine 1-(Sulfatoethylsulfon)-Substitution aufweist, bei einem pH-Wert von 9 bis 14, vorzugsweise von 9,5 bis 13, und zweckmäßigerweise bei einer Temperatur von zwischen 40 und 100°C umsetzt.

Beispiele für $C_1$-$C_4$-Alkylammonium-Verbindungen, die zur Kationisierung der besagten Polysaccharide eingesetzt werden, sind Glycidyltrimethylammonium-Sulfat oder -Chlorid, Sulfatoethyltrimethylammonium-Sulfat oder -Chlorid sowie 3-Chlor-2-hydroxypropyl-trimethylammonium-Sulfat oder -Chlorid.

Als anionische Farbstoffe, die mit den beschriebenen kationischen Polysacchariden Farbsalze oder Mischungen bilden, sind zahlreich in der Literatur beschrieben. Die Farbstoffe können den verschiedensten Farbstoffklassen angehören, wie beispielsweise der Klasse der Monoazo-, Disazo-, Polyazo-, Metallkomplex-Azo-, wie 1:1-Kupfer-, 1: 2-Chrom- und 1:2-Kobaltkomplex-Monoazo- und -Disazo-Farbstoffe, weiterhin der Reihe der Anthrachinonfarbstoffe, Kupfer-, Nickel- und Kobaltphthalocyaninfarbstoffe, Kupferformazanfarbstoffe, Azomethin-, Nitroaryl-, Dioxazin-, Triphendioxazin-, Phenazin- und Stilbenfarbstoffe.

Faserreaktive Reste sind beispielsweise: Vinylsulfonyl, β-Chlorethylsulfonyl, β-Sulfatoethylsulfonyl, β-Acetoxy-ethylsulfonyl, β-Phosphatoethylsulfonyl, β-Thiosulfatoethylsulfonyl, N-Methyl-N-(β-sulfatoethyl-sulfonyl)-amino, Acryloyl, $-CO-CCl = CH_2$, -CO-CH = CH-Cl, -CO-CCl = CHCl, $-CO-CCl = CH-CH_3$, $-CO-CBr=CH_2$, -CO-CH = CH-Br, $-CO-CBr = CH-CH_3$, -CO-CCl = CH-COOH, -CO-CH = CCl-COOH, -CO-CBr = CH-COOH, -CO-CH = CBr-COOH, -CO-CCl =CCl-COOH, -CO-CBr = CBr-COOH, β-Chlor- oder β-Brompropionyl, 3-Phenylsulfonylpropionyl, 3-Methylsulfonylpropionyl, 3-Chlor-3-phenylsulfonylpropionyl, 2,3-Dichlorpropionyl, 2,3-Dibrompropionyl, 2-Fluor-2-chlor-3,3-difluorcyclobutan-2-carbonyl, 2,2,3,3-Tetrafluorcyclobutan-1-carbonyl oder -1-sulfonyl, β-(2,2,3,3-Tetrafluorcyclobutyl-1)acryloyl, α- oder β-Methylsulfonylacryloyl, Propiolyl, Chloracetyl, Bromacetyl, 4-(β-Chlorethylsulfonyl)-butyril, 4-Vinylsulfonyl-butyryl, 5-(β-Chlorethyl-sulfonyl)valeryl, 5-Vinylsulfonyl-valeryl, 6-(β-Chlorethyl-sulfonyl)-caproyl, 6-Vinylsulfonylcaproyl, 4-Fluor-3-nitro-benzoyl, 4-Fluor-3-nitrophenylsulfonyl, 4-Fluor-3-methylsulfonylbenzoyl, 4-Fluor-3-cyano-benzoyl, 2-Fluor-5-methylsulfonyl-benzoyl, 2,4-Dichlortriazinyl-6, 2,4-Dichlor-pyrimidinyl-6, 2,4,5-Trichlorpyrimidinyl-6, 2,4-Dichlor-5-nitro- oder 5-methyl- oder -5-carboxymethyl oder -5-carboxy oder -5-cyano oder -5-vinyl oder -5-sulfo oder -5-mono-, di- oder trichlormethyl oder -5-methylsulfonyl-pyrimidinyl-6, 2,5-Dichlor-4-methylsulfonyl-pyrimidinyl-6, 2-Fluor-4-pyrimidinyl, 2,6-Difluor-4-pyrimidinyl, 2,6-Difluor-5-chlor-4-pyrimidinyl, 2-Fluor-5,6-dichlor-4-pyrimidinyl, 2,6-Difluor-5-methyl-4-pyrimidinyl, 2,5-Difluor-6-methyl-4-pyrimidinyl, 2-Fluor-5-methyl-6-chlor-4-pyrimidinyl, 2-Fluor-5-nitro-6-chlor-4-pyrimidinyl, 5-Brom-2-fluor-4-pyrimidinyl, 2-Fluor-5-cyan-4-pyrimidinyl, 2-Fluor-5-methyl-4-pyrimidinyl, 2,5,6-Trifluor-4-pyrimidinyl, 5-Chlor-6-chlormethyl-2-fluor-4-pyrimidinyl, 2,6-Difluor-5-brom-4-pyrimidinyl, 2-Fluor-5-brom-6-chlor-methyl-4-pyrimidinyl, 2,6-Difluor-5-chlormethyl-4-pyrimidinyl, 2,6-Difluor-5-nitro-4-pyrimidinyl, 2-Fluor-6-methyl-4-pyrimidinyl, 2-Fluor-5-chlor-6-methyl-4-pyrimidinyl, 2-Fluor-5-chlor-4-pyrimidinyl, 2-Fluor-6-chlor-4-pyrimidinyl, 6-Trifluormethyl-5-chlor-2-fluor-4-pyrimidinyl, 6-Trifluormethyl-2-fluor-4-pyrimidinyl, 2-Fluor-5-nitro-4-pyrimidinyl, 2-Fluor-5-trifluormethyl-4-pyrimidinyl, 2-Fluor-5-phenyl oder -5-methylsulfonyl-4-pyrimidinyl, 2-Fluor-5-carbonamido-4-pyrimidinyl, 2-Fluor-5-carbomethoxy-4-pyrimidinyl, 2-Fluor-5-brom-6-trifluormethyl-4-pyrimidinyl, 2-Fluor-6-carbonamido-4-pyrimidinyl, 2-Fluor-6-carbomethoxy-4-pyrimidinyl, 2-Fluor-6-phenyl-4-pyrimidinyl, 2-Fluor-6-cyan-4-pyrimidinyl, 2,6-Difluor-5-methylsulfonyl-4-pyrimidinyl, 2-Fluor-5-sulfonamido-4-pyrimidinyl, 2-Fluor-5-chlor-6-carbomethoxy-4-pyrimidinyl, 2,6-Difluor-5-trifluormethyl-4-pyrimidinyl, 2,4-Bis-(methylsulfonyl)-pyrimidinyl-4, 2,5-Bis-(methyl-sulfonyl)-5-chlor-pyrimidinyl-4, 2-Methylsulfonylpyrimidinyl-4, 2-Phenylsulfonyl-pyrimidinyl-4, 2-Methylsulfonyl-5-chlor-6-methyl-pyrimidinyl-4, 2-Methylsulfonyl-5-brom-6-methylpyrimidinyl-4, 2-Methylsulfonyl-5-chlor-6-ethyl-pyrimidinyl-4, 2-Methylsulfonyl-5-chlor-methyl-pyrimidinyl-4, 2-Methylsulfonyl-5-nitro-6-methyl-pyrimidinyl-4, 2,5,6-Tris-methylsulfonylpyrimidinyl-4, 2-Methylsulfonyl-5,6-dimethyl-pyrimidinyl-4, 2-Ethylsulfonyl-5-chlor-6-methyl-pyrimidinyl-4, 2-Methylsulfonyl-6-chlorpyrimidinyl-4, 2,6-Bis(methylsulfonyl)-5-chlor-pyrimidinyl-4, 2-Methylsulfonyl-6-carboxy-pyrimidinyl-4, 2-Methylsulfonyl-5-sulfopyrimidinyl-4, 2-Methylsulfonyl-6-carbomethoxypyrimidinyl-4, 2-Methylsulfonyl-5-carboxy-pyrimidinyl-4, 2-Methylsulfonyl-5-cyan-6-methoxy-pyrimidinyl-4, 2-Methylsulfonyl-5-chlor-pyrimidinyl-4, 2-Sulfoethylsulfonyl-6-methylpyrimidinyl-4, 2-Methylsulfonyl-5-brom-pyrimidinyl-4, 2-Phenylsulfonyl-5-chlor-pyrimidinyl-4, 2-Carboxymethylsulfonyl-5-chlor-6-methyl-pyrimidinyl-4, 2,4-Dichlorpyrimidin-6-carbonyl oder -6-sulfonyl, 2,4-Dichlorpyrimidin-5-carbonyl oder -5-sulfonyl, 2-Chlor-4-methylpyrimidin-5-carbonyl, 2-Methyl-4-chlorpyrimidin-5-carbonyl, 2-Methylthio-4-fluorpyrimidin-5-carbonyl, 6-Methyl-2,4-dichlorpyrimidin-5-carbonyl, 2,4,6-Trichlorpyrimidin-5-carbonyl, 2,4-Dichlorpyrimidin-5-sulfonyl, 2,4-Dichlor-6-methyl-pyrimidin-5-carbonyl oder -5-sulfonyl, 2-Methylsulfonyl-6-chlorpyrimidin-4 und -5-carbonyl, 2,6-Bis-(methylsulfonyl)-pyrimidin-4 oder -5-carbonyl, 2-Ethylsulfonyl-6-chlorpyrimidin-5-carbonyl, 2,4-Bis-(methylsulfonyl)-pyrimidin-5-sulfonyl, 2-Methylsulfonyl-4-chlor-6-methylpyrimidin-5-sulfonyl- oder -5-carbonyl, 2-Chlorchinoxalin-3-carbonyl, 2- oder 3-Monochlorchinoxalin-6-carbonyl, 2-oder 3-Monochlorchinoxalin-6-sulfonyl, 2,3-Dichlorchinoxalin-5- oder -6-carbonyl, 2,3-Dichlorchinoxalin-5- oder -6-sulfonyl, 1,4-Dichlorphthalazin-6-sulfonyl- oder -6-carbonyl, 2,4-Dichlorchinazolin-7- oder -6-sulfonyl- oder-carbonyl, 2,4,6-Trichlorchinazolin-7 oder 8-sulfonyl, 2- oder 3- oder 4-(4',5'-Dichlor-pyridazon-6'-yl-1')-phenylsulfonyl oder -carbonyl, β-(4',5'-Dichlorpyridazinon-6'-yl-1')-propionyl, 3,6-Dichlorpyridazin-4-carbonyl oder -4-sulfonyl, 2-Chlorbenzthiazol-5- oder -6-carbonyl oder -5- oder -6-sulfonyl, 2-Arylsulfonyl- oder 2-Alkylsulfonylbenzthiazol-5- oder -6-carbonyl oder -5- oder-6-sulfonyl, wie 2-Methylsulfonyl- oder 2-Ethylsulfonylbenzthiazol-5- oder -6-sulfonyl oder -carbonyl, 2-Phenylsulfonyl-benzthiazol-5- oder -6-sulfonyl- oder - carbonyl und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl, 2-Chlorbenzimidazol-5-oder -6-carbonyl oder -sulfonyl, 2-Chlor-1-methylbenzimidazol-5-oder -6-carbonyl oder -sulfonyl, 2-Chlor-4-methylthiazol-(1,3)-5-carbonyl) oder -4- oder -5-sulfonyl; ammoniumgruppenhaltige Triazinringe, wie 2-Trimethylammonium-4-phenylamino- und 4-(o, m- oder p-Sulfophenyl)-amino-triazinyl-6, 2-(1,1-Dimethylhydrazinium)-4-phenylamino- und 4-(o-, m- oder p-Sulfophenyl)-aminotriazinyl-6, 2-(2-Isopropyliden-1,1-dimethyl)hydrazinium-4-phenylamino- und 4-(o-, m- oder p-Sulfophenyl)-aminotriazinyl-6, 2-N-Aminopyrrolidinium-, 2-N-Aminopiperidinium-4-phenylamino- oder 4-(o-, m- oder p-Sulfophenyl)-aminotriazinyl-6, 4-Phenylamino-oder 4-(Sulfophenylamino)-triazinyl-6, die in 2-Stellung über eine Stickstoffbindung das 1,4-Bis-aza-bicyclo[2,2,2]octan oder das 1,2-Bis-aza-bicyclo-[0,3,3]-octan quartär gebunden enthalten, 2-Pyridinium-4-phenylamino- oder 4-(o-, m-oder p-Sulfophenyl)-amino-triazinyl-6 sowie entsprechende 2-Oniumtriazinyl-6-Reste, die in 4-Stellung durch Alkylamino, wie Methylamino, Ethylamino oder β-Hydroxy-ethylamino, oder Alkoxy, wie Methoxy oder Ethoxy, oder Aryloxy, wie Phenoxy oder Sulfophenoxy, substituiert sind.

Es ist möglich, daß ein oder mehrere, vorzugsweise 1 oder 2, Reaktivanker des Farbstoffes mit einer oder mehreren freien OH-Gruppen des kationischen Polysaccharids, insbesondere mit der 6-OH-Gruppe, in der für Reaktivfarbstoffe bekannten Weise zur Reaktion gebracht werden, beispielsweise durch Einstellen eines alkalischen pH-Wertes und/oder Erwärmen auf 40 bis 80°C.

Als Säure- und Direktfarbstoffe kommen in Betracht:
Diamin-Farbstoffe, ®Sirius Lichtecht-Farbstoffe, ®Alphanol-Farbstoffe, ®Cotonerol-Farbstoffe und ®Duasyn-Farbstoffe geeignet, wie z.B. C.I. Acid Black 27 (C.I. No. 26 310), C.I. Acid Black 35 (C.I. No. 26 320), C.I. Acid Blue 113 (C. I. No. 26 360), C.I. Direct Orange 49 (C.I. No. 29 050), C.I. Direct Orange 69 (C.I. No. 29 055), C.I. Direct Yellow 34 (C.I. No. 29 060), C.I. Direct Red 79 (C.I. No. 29 065), C.I. Direct Yellow 67 (C.I. No. 29 080), C.I. Direct Brown 126 (C.I. No. 29085), C.I. Direct Red 84 (C.I. No. 35 760), C.I. Direct Red 80 (C.I. No. 35 780), C.I. Direct Red 194 (C.I. No. 35 785), C.I. Direct Red 81 (C.I. No. 28 160), C.I. Direct Red 32 (C.I. No. 35 790), C.I. Direct Blue 162 (C.I. No. 35 770), C.I. Direct Blue 159 (C.I. No. 35 775), C.I. Direct Black 162:1 and C.I. Direct Violet 9 (C.I. No. 27 885).

Die erfindungsgemäß eingesetzten Formulierungen werden hergestellt, indem man das kationisierte Polysaccharid mit dem gewünschten anionischen Farbstoff im Gewichts-Verhältnis 1:1 bis 1:100, vorzugsweise 1:3 bis 1: 6 bei einem niedrig substituierten Polysaccharid und 1:20 bis 1:100 bei einem höher substituierten Polysaccharid, und bei einem pH-Wert von 5 bis 9, vorzugsweise 6 bis 8, in wäßriger oder wäßrig-organischer Lösung umsetzt und bevorzugt durch Zugabe eines Alkohols ausfällt, eindampft oder sprühtrocknet oder indem man die pulverförmigen Feststoffe intensiv miteinander mischt. In manchen Fällen geschieht die Ausfällung spontan nach der Umsetzung.

Die erfindungsgemäß eingesetzten Formulierungen sind in tiefen Tönen gefärbt und können bei der Viskoseherstellung mit Zellstoffen oder farblosen Cellulosen in unterschiedlichen Konzentrationen vermischt werden. Der Farbstoff wird so stark an das Polysaccharid und somit an die Viskose gebunden, daß das Fällbad nicht angeschmutzt wird. Dies gilt auch für Farbstoffe, die nicht zusätzlich über einen Reaktivanker an das Polysaccharid kovalent gebunden sind. Auf diese Weise lassen sich farbige Spinnlösungen erzeugen, die zu farbigen Regeneratfasern oder -folien koaguliert werden können. Die Stärke- oder Cellulosereste der Farbstoff-Salze werden vermutlich in der Viskosematrix eingebettet und verhindern ein Auslösen der Farbstoffe.

Es ist bekannt, z.B. G. Ebner, D. Scholz, Textilfärberei und Farbstoffe, Springer Verlag 1989, Seite 50, wie Cellulosen, vornehmlich in Form von Zellstoff, im Xanthogenat-Verfahren zu Viskosen verarbeitet werden. Außer dem Xanthogenat-Verfahren existieren weitere Verfahren zum Lösen und Verspinnen von Zellstoffen und Linters wie z.B. das Nitratverfahren, das Acetatverfahren, das Kupferverfahren (Kupferreyon, Bembergseide) und das N-Methyl-Morpholin-N-Oxid-Verfahren (®Tencel). Cellulose kann auch mit LiOH/Dimethylformamid gelöst werden. Der verwendete Zellstoff stammt überwiegend aus Holzprodukten und hat einen niedrigeren Polymerisationsgrad als Baumwolle. Linters sind kurzfaserige Baumwollfasern und sind für die Viskoseherstellung ein teurer Rohstoff, der meist nur im Kupfer-Verfahren verwendet wird, das für die Erzeugung von Hohlmembranen für die Dialyse verwendet wird.

Das Verfahren zur Herstellung der gefärbten Cellulose-Regeneratfasern wird durchgeführt, indem man entweder Cellulose alkalisch aufschließt (Alkalicellulose), mit Schwefelkohlenstoff umsetzt und der so erhaltenen Viskosespinnlösung die besagten Farbsalze zusetzt oder indem man die Farbsalze direkt zur Alkalicellulose zugibt und dann xanthogeniert. Durch anschließendes Verspinnen in einem sauren Spinnbad werden gefärbte Viskosefasern erhalten.

Die für das vorliegende Verfahren eingesetzten Farbsalze und Mischungen werden in wäßrigem Medium oder zweckmäßig auch mit Hilfe von Emulgatoren in die Viskosespinnmasse eingearbeitet und zeigen mit der Viskose eine gute Verträglichkeit. Der Zusatz des Farbsalzes erfolgt in einer Menge von 1 bis 20 %, vorzugsweise 1 bis 12 Gew.-%, bezogen auf den Cellulosegehalt der Spinnmasse vor der Fällung und Verformung.

Werden die erfindungsgemäßen Fasern nach anderen üblichen, dem Fachmann geläufigen Verfahren zur Herstellung cellulosischer Fasern aus Lösung heraus, wie beispielsweise dem Cuproverfahren, dem Lyocellverfahren und dem Verfahren über niedrig substituierte Cellulosether, hergestellt, so wird die Cellulose in einem geeigneten organischen Lösemittel gelöst, mit dem Farbsalz versetzt und direkt aus der Lösung zu Fasern versponnen. Am günstigsten ist ein Zudosieren unmittelbar vor der Verspinnung, wobei die Einmischung und homogene Verteilung durch bekannte Mischsysteme mit Hilfe von statischen oder dynamischen Mischsystemen erfolgen kann. Das Zudosieren kann aber auch in einer beliebigen Vorstufe bei der Spinmasseherstellung erfolgen.

Die Erzeugung der Alkalicellulose erfolgt vorzugsweise mit 15 bis 20 gew.-%iger Alkalilauge, beispielsweise Natronlauge oder Kalilauge, vorzugsweise Natronlauge, bei einer Temperatur von 20 bis 40°C. Zweckmäßigerweise werden pro 100 Gew.-Teile Fasern 1000 bis 3000 Gew.-% Teile Alkalilauge eingesetzt.

Gegenstand der vorliegenden Erfindung sind auch gefärbte Celluloseregeneratfasern, die nach den vorstehend beschriebenen Verfahren und Verfahrensvarianten hergestellt wurden.

Die gefärbten Celluloseregeneratfasern können nach üblichen Methoden zu Geweben und Gewirken weiterverarbeitet werden. Durch die feste Bindung der Farbsalze an die Cellulosefasern besitzen daraus hergestellte Textilien hohe Echtheiten, insbesondere Wasch-, Schweiß- und Reibechtheiten. Ein separater Färbeprozeß ist daher nicht erforderlich.

In den nachfolgenden Beispielen bedeuten Teile Gewichtsteile. Die Molmassen der verwendeten Stärken sind üblicherweise auf eine Anhydroglucoseeinheit bezogen.

Beispiel 1

a) 20 Teile einer käuflichen, kationisierten Stärke, beispielsweise ®Catsol, ®Fibraffin oder ®Cerestar mit einem durchschnittlichen Substitutionsgrad von etwa 0,05 und einem mittleren Molekulargewicht von 198 werden mit 93 Teilen (0,1 Mol) C.I. Reactive Red 239 (CAS 89157-03-9) in 300 ml Wasser verrührt. Der pH-Wert der Lösung ist 6. Nach 30 Min Rührung bei 25°C wird die Mischung eingedampft. Man erhält ein tiefrot gefärbtes Farbsalz. Das isolierte, farbige Produkt kann nun zur Spinnfärbung verwendet werden.

b) 60 Teile Zellstoff werden mit 1000 Teilen einer 18 %igen Natronlauge versetzt und 45 Minuten vermengt. Nach dieser Zeit wird die überschüssige Lauge über eine Glasfritte abgesaugt. Die so erzeugte Alkalicellulose beläßt man zum Reifen 60 Minuten bei 60°C, kühlt auf 15°C ab und setzt 20 Teile Schwefelkohlenstoff so zu, daß die Temperatur 30°C nicht übersteigt. Nach 45 Minuten Reaktionszeit trägt man die gelbliche Masse in 450 Teile einer 4 %igen Natronlauge ein und verrührt das Xanthogenat zu einer homogenen, viskosen Masse.

Nach dem Entgasen wird die Spinnmasse mit 6 Teilen Farbsalz aus a), in 15 Teilen Wasser dispergiert, versetzt und in der Viskose homogenisiert. Anschließend wird die farbige Viskose nach betriebsüblichen Viskosespinnverfahren in ein schwefelsaures Natrium- und Zinksulfat-haltiges Bad zu Fasern versponnen, in sauren Bädern verstreckt, geschnitten, gewaschen, präpariert und getrocknet.

Beispiel 2

a) 20 Teile der käuflichen, kationisierten Stärke ®Catsol mit einem durchschnittlichen Substitutionsgrad von 0,05 und einem mittleren Molekulargewicht von 198 werden mit 70 Teilen (0,1 Mol) C.I. Reactive Blue 19 in 300 ml Wasser verrührt. Der pH-Wert der Lösung wird auf pH 10 mit Soda eingestellt. Nach 30 Min Rührung bei 60°C wird die Mischung eingedampft. Man erhält ein tief blau gefärbtes Farbsalz. Das isolierte, farbige Produkt kann nun zur Spinnfärbung verwendet werden.

b) 60 Teile Zellstoff werden mit 1000 Teilen einer 18 %igen Natronlauge versetzt und 45 Minuten vermengt. Nach dieser Zeit wird die überschüssige Lauge über eine Glasfritte abgesaugt. Die so erzeugte Alkalicellulose beläßt man zum Reifen 60 Minuten bei 60°C, kühlt auf 15°C ab und setzt 20 Teile Schwefelkohlenstoff so zu, daß die Temperatur 30°C nicht übersteigt. Nach 45 Minuten Reaktionszeit trägt man die gelbliche Masse in 450 Teile einer 4 %igen Natronlauge ein und verrührt das Xanthogenat zu einer homogenen, viskosen Masse.

Nach dem Entgasen wird die Spinnmasse mit 6 Teilen Farbsalz aus a.), in 15 Teilen dispergiert, zugegeben und in der Viskose homogenisiert. Anschließend wird die farbige Viskose nach betriebsüblichen Viskosespinnverfahren in ein schwefelsaures, Natrium- und Zinksulfat-haltiges Bad zu Fasern versponnen, in sauren Bädern verstreckt, geschnitten, gewaschen, präpariert und getrocknet.

Beispiel 3

20 Teile der käuflichen, kationisierten Stärke ®Fibraffin mit einem durchschnittlichen Substitutionsgrad von 0,05 und einem mittleren Molekulargewicht von 198 werden mit 70 Teilen (0,1 Mol) des türkisen Reaktivfarbstoffs, bekannt aus der DE-A-1 179 317, Bsp. 2 in 300 ml Wasser verrührt. Der pH-Wert der Lösung wird auf pH 10 mit Soda eingestellt. Nach 30 Min Rührung bei 60°C wird die Mischung eingedampft. Man erhält einen türkis gefärbten Feststoff. Das isolierte, farbige Produkt kann nun zur Spinnfärbung verwendet werden. Analog Beispiel 1 b.) und 2.b) wird hieraus eine farbige Viskosefaser hergestellt.

Beispiel 4

Herstellung des Stärkeethers:

162 g (1 mol) Kartoffelstärke, technisch trocken, werden in einem Kneter in 500 ml Wasser, in dem zuvor 26,4 g (0,66 mol) Ätznatron gelöst wurden, eingetragen. Anschließend werden zu dieser Mischung 130 g (0,6 mol) 2,3-Epoxypropyltrimethylammoniumchlorid als 70 %ige Lösung in Wasser gegeben. Die Mischung wird 4 Stunden bei 60°C geknetet, auf Raumtemperatur abgekühlt und mit Schwefelsäure auf pH 6 gestellt. Die Viskosität beträgt 5,6 Pas bei 50°C und 19,6 Pas bei 20°C.

1 Teil der vorstehend beschriebenen kationisierten Stärke mit einem durchschnittlichen Substitutionsgrad von 0,67 werden mit 93 Teilen C.I. Reactive Red 239 (CAS 89157-03-9) vermahlen. Analog Beispiel 1b) und 2b) wird hieraus eine farbige Viskosefaser hergestellt.

Weiterhin werden die folgenden Farbstoffe eingesetzt und mit einer kationischen Stärke gemäß Beispiel 1 umgesetzt.

| Beispiel | | Farbe |
|---|---|---|
| 5 | C.I. Reactive Red 21 (CAS 85940-66-5) | rot |
| 6 | C.I. Reactive Red 35 (CAS 85940-67-6) | rot |
| 7 | C.I. Reactive Red 174 (CAS 68833-98-7) | rot |
| 8 | EP-A-0 457 715 Bsp. 106 | rot |
| 9 | EP-A-0 122 881 Bsp. 1 | rot |
| 10 | C.I. Reactive Orange 91 | orange |
| 11 | C.I. Reactive Yellow 23 (CAS 72187-36-1) | gelb |
| Beispiel | | Farbe |
| 12 | EP-A-0 158 233 Bsp. 1 | gelb |
| 13 | DE-A-2 840 380 Bsp. 1 | gelb |
| 14 | C.I. Reactive Blue 182 (EP 0 228 348 Bsp. 1) | blau |
| 15 | C.I. Reactive Black 5 | blauschwarz |
| 16 | EP-A-0 153 599 Bsp. 1 | blau |
| 17 | C.I. Direct Orange 49 (C.I. No. 29 050) | orange |
| 18 | C.I. Acid Blue 113 (C.I. No. 26 360) | blau |

## Patentansprüche

1. Verfahren zur Herstellung farbiger Regeneratcellulosefasern, dadurch gekennzeichnet, daß man einer Viskosemasse, Alkalicellulose oder einer Celluloselösung eine Formulierung aus einem kationisierten Polysaccharid und einem anionischen Farbstoff in einer Menge von 1 bis 20 Gew.-%, bezogen auf den Cellulosegehalt der Spinnmasse vor der Fällung und Verformung, zusetzt und nach einem Viskosespinnverfahren oder aus der Celluloselösung Fasern spinnt.

2. Verfahren nach Anspruch 1, dadurch gekennzeichnet, daß die Formulierung aus einer kationischen Stärke oder kationischen Cellulose und einem Reaktivfarbstoff, Säure- oder Direktfarbstoff, der mindestens eine anionische Gruppe enthält, besteht.

3. Verfahren gemäß Anspruch 1 oder 2, dadurch gekennzeichnet, daß der kationische Rest des kationischen Polysaccharids eine $C_1$-$C_4$-Alkylammoniumgruppe ist, die mit einer Hydroxygruppe des Polysaccharids verethert ist.

4. Verfahren gemäß mindestens einem der Ansprüche 1 bis 3, dadurch gekennzeichnet, daß der kationische Rest des kationischen Polysaccharids ein Rest der Formel

$$-(CHR^1)_x-\overset{\oplus}{N}R^2R^3R^4$$

ist, worin $R^1$ Wasserstoff, Hydroxy, Amino, Ammonium, $C_1$-$C_4$-Alkyl oder $C_1$-$C_4$-Alkoxy ist;
$R^2$, $R^3$ und $R^4$ gleich oder verschieden sind und unabhängig voneinander die Bedeutung Wasserstoff, Phenyl oder $C_1$-$C_4$-Alkyl haben, wobei der Alkylrest durch ein oder mehrere OH-Gruppen oder $OCH_3$-Gruppen substituiert oder durch O-Atome oder NH-Gruppen unterbrochen sein kann, oder die Reste $R^2$, $R^3$ und $R^4$ zusammen mit dem N-Atom einen 5-bis 7-gliedrigen heterocyclischen Ring bilden, der gegebenenfalls weitere der Heteroatome N, S und O im Ring enthält, und x eine Zahl von 1 bis 4, vorzugweise 2 bis 3, ist.

**5.** Verfahren gemäß mindestens einem der Ansprüche 1 bis 4, dadurch gekennzeichnet, daß der kationische Rest des kationischen Polysaccharids ein Rest der Formel $-CH_2CH_2NH_3^+$, $-CH_2CH_2CH_2NH_3^+$, $-CH_2CH_2N(CH_3)_3^+$ oder $-CH_2CHOHCH_2N(CH_3)_3^+$ ist.

**6.** Verfahren gemäß mindestens einem der Ansprüche 1 bis 5, dadurch gekennzeichnet, daß der anionische Farbstoff der Klasse der Monoazo-, Disazo-, Polyazo-, Metallkomplex-Azo- oder -Disazo-Farbstoffe, der Anthrachinonfarbstoffe, Kupfer-, Nickel- oder Kobaltphthalocyaninfarbstoffe, Kupferformazanfarbstoffe, Azomethin-, Nitroaryl-, Dioxazin-, Triphendioxazin-, Phenazin- oder Stilbenfarbstoffe angehört.

**7.** Verfahren gemäß Anspruch 6, dadurch gekennzeichnet, daß ein oder mehrere, vorzugsweise 1 bis 2, Reaktivanker des Farbstoffes kovalent an das kationische Polysaccharid gebunden sind.

**8.** Verfahren nach mindestens einem der Ansprüche 1 bis 7, dadurch gekennzeichnet, daß die Formulierung aus einem kationisierten Polysaccharid und einem anionischen Farbstoff in einer Menge von 1 bis 12 Gew.-%, bezogen auf den Cellulosegehalt der Spinnmasse vor der Fällung und Verformung, zugesetzt wird.

**9.** Gefärbte Celluloseregeneratfasern, hergestellt nach einem oder mehreren der Ansprüche 1 bis 8.

## Claims

**1.** A process for preparing colored regenerated-cellulose fiber, which comprises admixing a viscose dope, an alkali cellulose or a cellulose solution with an amount of 1 to 20% by weight, based on the cellulose content of the spinning dope prior to coagulation and shaping, of a formulation comprising a cationized polysaccharide and an anionic dye and spinning fiber by a viscose spinning process or from the cellulose solution.

**2.** The process of claim 1, wherein the formulation consists of a cationic starch or cationic cellulose and a reactive dye, an acid dye or a direct dye containing at least one anionic group.

**3.** The process of claim 1 or 2, wherein the cationic radical of the cationic polysaccharide is a $C_1$-$C_4$-alkylammonium group which is etherified with a hydroxyl group of the polysaccharide.

**4.** The process of at least one of claims 1 to 3, wherein the cationic radical of the cationic polysaccharide is a radical of the formula

$$-(CHR^1)_x-\overset{+}{N}R^2R^3R^4 ,$$

where $R^1$ is hydrogen, hydroxyl, amino, ammonium, $C_1$-$C_4$-alkyl or $C_1$-$C_4$-alkoxy;
$R^2$, $R^3$ and $R^4$ are identical or different and each is independently of the others hydrogen, phenyl or $C_1$-$C_4$-alkyl which may be substituted by one or more OH groups or OCH3 groups or interrupted by oxygen atoms or NH groups, or the radicals $R^2$, $R^3$ and $R^4$ form together with the nitrogen atom a 5- to 7-membered heterocyclic ring which optionally contains further of the heteroatoms N, S and O in the ring and x is a number from 1 to 4, preferably 2 to 3.

**5.** The process of at least one of claims 1 to 4, wherein the cationic radical of the cationic polysaccharide is a radical of the formula $-CH_2CH_2NH_3^+$, $-CH_2CH_2CH_2NH_3^+$, $-CH_2CH_2N(CH_3)_3^+$ or $-CH_2CHOHCH_2N(CH_3)_3^+$.

**6.** The process of at least one of claims 1 to 5, wherein the anionic dye belongs to the class of the monoazo, disazo, polyazo, metal complex azo or disazo dyes or to the series of the anthraquinone dyes, copper, nickel or cobalt phthalocyanine dyes, copper formazan dyes, azomethine, nitroaryl, dioxazine, triphendioxazine, phenazine or stilbene dyes.

**7.** The process of claim 6, wherein one or more, preferably 1 to 2, reactive hooks of the dye are bonded covalently to the cationic polysaccharide.

**8.** The process of at least one of claims 1 to 7, wherein the formulation comprising a cationized polysaccharide and an anionic dye is added in an amount of 1 to 12% by weight, based on the cellulose content of the spinning dope prior to coagulation and shaping.

**9.** Colored regenerated-cellulose fiber obtained by one or more of claims 1 to 8.

## Revendications

**1.** Procédé de préparation de fibres colorées de cellulose régénérée, caractérisé en ce que l'on mélange une solution de viscose, de la cellulose alcaline ou une solution de cellulose, avec une formulation comprenant un polysaccharide cationisé et un colorant anionique en une quantité de 1 à 20% en poids, par rapport à la teneur en cellulose de la solution à filer avant la coagulation et la mise en forme, et on file des fibres par un procédé de filage de viscose ou à partir de la solution de cellulose.

**2.** Procédé selon la revendication 1, caractérisé en ce que la formulation est constituée d'un amidon cationique ou de cellulose cationique et d'un colorant réactif, d'un colorant acide ou d'un colorant direct, renfermant au moins un groupe anionique.

**3.** Procédé selon la revendication 1 ou 2, caractérisé en ce que le radical cationique du polysaccharide cationique est un groupe $C_1$-$C_4$-alkylammonium qui est éthérifié avec un groupe hydroxy du polysaccharide.

**4.** Procédé selon au moins l'une des revendications 1 à 3, caractérisé en ce que le radical cationique du polysaccharide cationique est un radical de formule

$$-(CHR^1)_x-\overset{\oplus}{N}R^2R^3R^4,$$

dans laquelle $R^1$ est un hydrogène, un hydroxy, un amino, un ammonium, un alkyle en $C_1$-$C_4$ ou un alcoxy en $C_1$-$C_4$;
$R^2$, $R^3$ et $R^4$ sont identiques ou différents et représentent, indépendamment les uns des autres, un hydrogène, un phényle ou un alkyle en $C_1$-$C_4$, le radical alkyle pouvant être substitué par un ou plusieurs groupes OH ou groupes $OCH_3$, ou interrompu par des atomes O ou des groupes NH, ou les radicaux $R^2$, $R^3$ and $R^4$ forment conjointement avec l'atome N un noyau hétérocyclique à 5 à 7 chaînons, renfermant éventuellement davantage d'hétéroatomes N, S et O dans le noyau, et x est un nombre de 1 à 4, de préférence de 2 à 3.

**5.** Procédé selon au moins l'une des revendications 1 à 4, caractérisé en ce que le radical cationique du polysaccharide cationique est un radical de formule $-CH_2CH_2NH_3^+$, $-CH_2CH_2CH_2NH_3^+$, $-CH_2CH_2N(CH_3)_3^+$ ou $-CH_2CHOHCH_2N(CH_3)_3^+$.

**6.** Procédé selon au moins l'une des revendications 1 à 5, caractérisé en ce que le colorant anionique appartient à la catégorie des colorants monoazoïques, disazoïques, polyazoïques, complexes métalliques azoïques ou complexes métalliques disazoïques, des colorants anthraquinone, des colorants phtalocyanine au cuivre, au nickel ou au cobalt, des colorants formazane au cuivre, des colorants azométhine, nitroaryle, dioxazine, triphénodioxazine, phénazine ou stilbène.

**7.** Procédé selon la revendication 6, caractérisé en ce que une ou plusieurs, de préférence 1 à 2, ancres réactives du colorant sont liées par covalence au polysaccharide cationique.

**8.** Procédé selon au moins l'une des revendications 1 à 7, caractérisé en ce que la formulation comprenant un polysaccharide cationisé et un colorant anionique est ajouté en une quantité de 1 à 12% en poids, par rapport à la teneur en cellulose de la solution à filer avant la coagulation et la mise en forme.

**9.** Fibres colorées de cellulose régénérée, préparée selon l'une ou plusieurs des revendications 1 à 8.